Europäisches Patentamt

(19) European Patent Office

Office européen des brevets

(11) Publication number: **0 099 394**
**B1**

(12) ── EUROPEAN PATENT SPECIFICATION

(45) Date of publication of the patent specification:
12.03.86

(51) Int. Cl.⁴: **C 09 J 3/16,** C 08 G 63/66,
C 08 G 63/16

(21) Application number: 83900517.0

(22) Date of filing: 13.01.83

(86) International application number:
**PCT/US 83/00048**

(87) International publication number:
**WO 83/02621 (04.08.83 Gazette 83/18)**

(54) COPOLYESTERS COMPRISING TEREPHTHALIC ACID AND 1,4-BUTANE DIOL MOIETIES.

(30) Priority: 25.01.82 US 342612
27.10.82 US 437060

(43) Date of publication of application:
01.02.84 Bulletin 84/5

(45) Publication of the grant of the patent:
12.03.86 Bulletin 86/11

(84) Designated Contracting States:
BE DE FR GB NL

(56) References cited:
FR - A - 2 212 410
FR - A - 2 391 238
GB - A - 2 001 906
US - A - 3 669 921

Chemical Abstracts, vol. 80, no. 22, 3 June 1974
(Columbus, Ohio, US) see page 32, abstract no. 121751f,
JP, A, 7388172

(73) Proprietor: **EASTMAN KODAK COMPANY, 343 State
Street, Rochester New York 14650 (US)**

(72) Inventor: **SUBLETT, Bobby Jones, 1205 Jerry Lane,
Kingsport, TN 37664 (US)**

(74) Representative: **Baron, Paul Alexander Clifford et al,
Kodak Limited Patent Department Headstone Drive,
Harrow Middlesex HA1 4TY (GB)**

## Description

This invention relates to a linear copolyester derived from a terephthalic acid moiety, a 1,4-butanediol moiety and at least one other acid or glycol moiety. Such copolyesters are particularly useful fusible adhesives, especially fabric interlining adhesives and binder fiber adhesives.

Fabric interlinings are bonded to other fabrics by fusible adhesives to provide body and shape to a garment produced from the fabric without impairing the ability of the fabric to breathe. Examples of garments that are produced from fabrics having bonded interlinings are men's and women's suits, shirt collars and cuffs, and the waistbands of trousers. The interlining is coated on one side in a discontinuous pattern with a finely divided, crystalline, fusible adhesive having a low melting point and a high resistance to dry-cleaning fluids, such as perchloroethylene and trichloroethylene. The coated interlining is then bonded to the fabric by heating.

Certain copolyesters are useful as fusible adhesives for fabric interlinings. French Patent No. 2391238 describes polyesters made from 1,4-butanediol and a mixture of isophthalic and terephthalic acids and a $C_6$ to $C_{36}$ saturated aliphatic dicarboxylic acid. Other polyesters, from terephthalic acid, adipic acid, ethylene glycol and 1,4-butanediol, are described in U.S. Patent No. 3669921, issued June 13, 1972. Unfortunately, these latter copolyesters tend to block or stick together when they are in pellet form and silica is added in significant amounts to make it possible to grind this polymer into powder. Excessive amounts of silica in the powder, however, prevent good coatability and good fusion of the powder when it is used as a fusible adhesive for fabric interlinings. It is an objective of this invention to provide a linear copolyester that can be used in powder form or an interlining adhesive without the use of excessive amounts of silica to prevent blocking.

Binder fibers are used in nonwoven fabric which is formed from matrix fibers into a web, sheet, or mat, to bond the web, mat, or sheet together and give it strength. The binder fibers commonly used are polyolefin fibers, for example fibers formed from homo- or copolymers of ethylene or propylene, or partially oriented homo- or copolyesters, such as poly(ethylene terephthalate). The polyolefin binder fibers have poor adhesion to non woven matrix fibers which are not polyolefins and excessive amounts of binder fiber must be used even to bond fibers that are polyolefins.

Homo- and copolyester binder fibers available in the art require relatively high bonding temperatures and have very narrow temperature ranges for bonding. This is due to the fact that such fibers have a tendency to crystallize as the bonding temperature reaches the glass transition temperature of the binder fiber. These fibers cannot be melted or rendered molten when they are used with polyester matrix fibers or polyolefin matrix fibers because they have approximately the same melting temperature or flow temperature as a polyester matrix fiber and an much higher melting temperature than a polyolefin matrix fiber. The use of the high bonding temperatures would cause the matrix fiber to form a film sheet with no esthetic resemblance to a fabric.

This invention provides a class of linear copolyesters that are particularly useful as either fusible adhesives and can be used in the form of free-flowing powders or binder fibers that are not subject to the disadvantages described previously herein. The linear copolyesters of this invention are prepared by the condensation polymerization of a dibasic acid component and a glycol component. The dibasic acid component comprises a terephthalic acid moiety and the glycol component comprises a 1,4-butanediol moiety. The copolyesters are characterized in that:

(1) the dibasic acid component comprises from 40 to 100 mol-% of the terephthalic acid moiety, any remainder consisting essentially of at least one moiety from a saturated aliphatic dicarboxylic acid having 3 to 12 carbon atoms;

(2) the glycol component comprises from 40 to 100 mol-% of the 1,4-butanediol moiety, any remainder consisting essentially of diethylene glycol moiety, and

(3) the copolyester containing at least 20 mol-%, based on the 200 mol-% total of the dibasic acid and glycol components, of the saturated aliphatic dicarboxylic acid and/or the diethylene glycol;

(4) the copolyester having a crystalline melting point of 40 to 190° C, a glass transition temperature of −20 to 40° C, a heat of fusion $(\Delta H_f)$ not less than 4.18 J/g and a crystallization half-time of less than 10 min at maximum crystallization temperature.

The copolyesters of this invention are especially useful fusible adhesives on fabric interlinings and in the form of binder fibers. These copolyesters provide a unique combination of desirable properties such as good adhesion to a wide variety of materials, desirable melt and fusion temperatures, resistance to dry-cleaning fluids, desirable crystallinity and crystallization rates, spinnability and grindability.

To obtain the very desirable physical characteristics discussed in the previous paragraph, it is necessary that, in the copolyesters of this invention, either the dibasic acid or glycol component, or both, be a mixture of at least two acid or two glycol moieties. That is, either the dibasic acid component must contain a second acid moiety as described herein, in addition to terephthalic acid moiety, or the glycol component must contain diethylene glycol moiety in addition to 1,4-butanediol moiety.

The linear copolyesters of this invention are at least partially crystalline and are derived from a minimum of three different monomers. The dibasic acid component contains at least one saturated aliphatic dicarboxylic acid moiety in addition to terephthalic acid moiety and/or the glycol moiety contains diethylene glycol moiety in addition to 1,4-butanediol moiety. The saturated aliphatic dicarboxylic acids used in preparing the copolyesters contain 3 to 12, preferably 4 to 6, carbon atoms, as exemplified by malonic, succinic, glutaric, adipic, suberic, azelaic, sebacic and dodecanedioic acids. Of course, functionally equivalent ester-forming derivatives of terephthalic acid and the aliphatic dibasic acids can be employed to provide the appropriate acid moiety to the copolyester. Examples of such derivatives are the anhydrides, esters and ester halides of such acids.

The dibasic acid component of the copolyester of this invention contains a minimum of 40 and often 55 or 65 mol-% terephthalic acid moiety. The dibasic acid component can be 100 mol-% terephthalic acid moiety when no saturated aliphatic dicarboxylic acid moiety having 3 to 12 carbon atoms is used to form the copolyester. However, when such saturated dicarboxylic acid is used, it is present in the dibasic acid component in an amount of up to 60 mol-%, often up to 45 or 35 mol-%. The glycol component of the copolyester contains a minimum of 40, and often 55, 65 or 70 mol-% 1,4-butanediol moiety. The remainder of the glycol component, if any, comprises up to 60 mol-% diethylene glycol moiety.

Both the dibasic acid and glycol components can be modified with the additional saturated aliphatic acid and/or diethylene glycol moieties to obtain desired specific physical characteristics. In general, each mole percent modification of polybutylene terephthalate lowers the melting point about 1 to 2°C, usually about 1.5°C.

If the copolyesters of this invention are to be used in fusible interlinings, it is preferred that at least 50 mol-% of the dibasic acid component be terephthalic acid moiety and at least 50 mol-% of the glycol component be 1,4-butanediol moiety. In this case, it is also preferred that 60 to 120 mol-% based on a total of 200 mol-% dibasic acid and glycol components comprise:

(*a*) up to 60 mol-% adipic, glutaric, or succinic acid moiety,

(*b*) up to 60 mol-% of diethylene glycol moiety, or

(*c*) a combination of at least one of those acid moieties and diethylene glycol moiety,

and the copolyesters have a crystalline melting point of 40 to 130°C, a glass transition temperature $(T_g)$ of −20 to 40°C, $\Delta H_f$ of greater than 4.18 J/g and a crystallization half-time at maximum crystallization temperature of less than 10 min. However, if the copolyesters are to be used in the form of binder fibers, it is preferred that the dibasic acid component comprise at least 40 mol-% terephthalic acid moiety, and at least 40 mol-% 1,4-butanediol moiety and 20 to 70 mol-% based on a total of 200 mol-% dibasic acid and glycol components comprise:

(*a*) up to 60 mol-% of the saturated dicarboxylic acid moiety having 3 to 12 carbon atoms,

(*b*) up to 60 mol-% of diethylene glycol moiety, or

(*c*) a combination of at least one of those acid moieties and diethylene glycol moiety,

and the copolyester has a crystalline melting point of 125 to 190°C, a glass transition temperature $(T_g)$ of −20 to 40°C, $\Delta H_f$ of greater than 4.18 J/g and a crystallization half time at maximum crystallization temperature of less than 10 min. The copolyesters of this invention can be prepared by well-known condensation polymerization techniques. The crystalline melting point, $\Delta H_f$, and $T_g$ referred to herein can be measured by conventional means using a differential scanning calorimeter.

The copolyesters of this invention are readily put into powder form using conventional grinding techniques, preferably by cryogenic grinding. The powders are nonblocking (free-flowing) and can be readily applied to fusible interlining fabrics from powder point applicators, from random sprinkling equipment, or in the form of a paste. The particles are finely divided, i.e. from 1 to 500 μm. In the application of powders from powder point applicators, it is desirable to have powders with a particle size range of 50 to 200 μm (200 to 70 mesh). For random sprinkling application on tightly woven or nonwoven fabrics, a particle size of 150 to 300 μm (100 to 50 mesh) is desirable. For random sprinkling on open-weave fabrics such as rayon/cotton blends, powders of 300 to 500 μm size (50 to 35 mesh) are required. For application of powder in paste form, it is necessary to have very fine powders. For example, in paste form, powder size should be 1 to 80 μm (less than 200 U.S. mesh). Binder fibers can be produced using conventional spinning techniques well known in the art. The copolyesters may also be used in other forms to adhere fabrics to substrates. For example, they can be used in film form.

The copolyesters of this invention have a heat of fusion notless than 4.18 and preferably not less than 12.5 J/g. The heat of fusion $(\Delta H_f)$ of a polymer is the amount of heat absorbed when a crystallizable polymer is melted. As previously indicated herein, $\Delta H_f$ values are readily obtained using a differentiel scanning calorimeter (DSC). One method for determining $\Delta H_f$ is described in "Journal of Applied Polymer Science", *20*, 1209 (1976). Measurement of $\Delta H_f$ is also described in "Dupont Thermal Analysis Bulletin", No. 900-8 (1965). Qualitatively, it is possible to compare the degree of crystallinity of polymers by comparing their $\Delta H_f$ values.

One commonly used parameter for describing the crystallization rate of a polymer is the crystallization half-time, $t_{1/2}$. The crystallization half-time is the time at which the crystallization of an originally amorphous sample is half-completed according to the method used to monitor crystallinity and may be determined in any conventional manner. The half-time is strongly dependent on the crystallization temperature. A reference to this subject is "Kinetics of Phase Change II — Transformation — Time Relations for Random Distribution of Nuclei" y Melvin Avrami, published in "Journal of Chemical Physics", Feb. 1940, p. 212.

One way of determining the isothermal crystallization of a polymer is an approximation described by the Avrami equation

$$X = X_o \left(1 - e^{-\left(\frac{t}{\tau}\right)^n}\right) \qquad (1)$$

where $X_o$ is the limiting value of the crystallinity, $X$ is isothermal crystallization, $\tau$ is a characteristic time determined by the polymer and the crystallization temperature, and $n$ is the so-called Avrami exponent, generally in the range 2.0 to 3.5. The reduced crystallization half-time $(\frac{t}{\tau})_{\frac{1}{2}}$ is obtained by solving

$$\frac{X}{X_o} = \frac{1}{2} = 1 - e - (\frac{t}{\tau})^n_{\frac{1}{2}} \qquad (2)$$

to get

$$(\frac{t}{\tau})_{\frac{1}{2}} = \sqrt{\ln 2} \qquad (3)$$

The DSC response obtained is described by differentiating equation (1) with respect to time to get

$$\frac{dX}{dt} = X_o\frac{n}{\tau} \ (\frac{t}{\tau})^{n-1} e - (\frac{t}{\tau})^n \qquad (4)$$

This function has a maximum for all $n > 1$. Differentiating equation (4) with respect to time, setting the derivative equal to zero and solving to $t/\tau$, one finds the maximum of $dX/dt$, which is the peak of the DSC curve, to belocated at

$$\frac{t_p}{(\tau)} = n\sqrt{\frac{n-1}{n}} \qquad (5)$$

where $t_p$ is the time required to reach the peak of crystallization exotherm.

The ratio of $\frac{t_p}{(\tau)}$ to $(\frac{t}{\tau})_{\frac{1}{2}}$,

$$\frac{\frac{(t_p)}{\tau}}{(\frac{t}{\tau})_{\frac{1}{2}}} = \frac{t_p}{t_{\frac{1}{2}}} = n\sqrt{\frac{n-1}{n \ln 2}} \qquad (6)$$

The ratio $\frac{t_p}{(t_{\frac{1}{2}})}$ is between 0.85 and 1.04 for $n \geq 2$. The curve of $t_p$ versus crystallization temperature is a sufficient approximation of the curve $t_{\frac{1}{2}}$ versus crystallization temperature.

When the copolyesters of this invention are employed as fusible or melt adhesives to laminate various fabrics, metal strips and the like, excellent bonds result. These bonds are highly resistant to the action of dry-cleaning solvents such as perchloroethylene. The strength of the bonds can be determined by any convenient method such as a peel test based on ASTM T-Peel Test set forth on pp. 609-611 of the 1972 edition of the "Book of ASTM Standards", published by the American Society for Testing Materials, and more specifically identified as Test No. D-1876-69. Results are averages of three determinations per sample.

Dyes or dye receptive agents, color stabilizers and various other adjuvants may be added to the copolyester adhesive compositions to meet certain specific end use requirements. Such additives are normally added to the polymerization mixture in which the copolyester is produced.

The inherent viscosity (I.V.) reported in the following examples was measured at 25°C using 0.05 g of copolyester per 100 ml of a solvent consisting of 60 weight-% phenol and 40 weight-% tetrachloroethane. Also, unless otherwise specified, all parts, percentages and ratios referred to herein are by weight.

The following examples are submitted for a better understanding of the invention.

*Example 1:*

A typical procedure for preparing a copolyester is as follows: 0.53 and 0.35 g of dimethyl terephthalate (0.275 mol), 36 g (0.225 mol) of dimethyl glutarate, 55.35 g (0.615 mol) of 1,4-butanediol, 40.8 g (0.385 mol) of diethylene glycol, and 1 ml of n-butanol solution of titanium tetraisopropoxide which is 1.24 weight-% titanium were weighed into a 500 ml single-neck, round-bottom flask equipped with a nitrogen inlet, stirrer, vacuum outlet, and condensing flask. The flask was heated at 200°C in a metal bath for 3 h with a nitrogen sweep over the reaction mixture. When the theoretical amount of methanol had distilled from the reaction mixture, the metal bath temperature was increased to 225°C at a reduced pressure of 0.5 to 0.1 mmHg for 1 h. The flask was then removed from the bath and allowed to cool as the polyester crystallized. Gas chromatographic analysis of the copolyester showed the following mole percents: dimethyl terephthalate 55 mol-%; dimethyl glutarate 45 mol-%; 1,4-butanediol 70 mol-%; and diethylene glycol 30 mol-%.

The copolyester had an inherent viscosity of 1.0, a crystalline melting point of 115°C (DSC), and a crystallization half-time of 1.2 min at 60°C.

Several other copolyesters of this invention, identified in Table I (Runs 1 to 8), were prepared in the manner of the typical procedure described previously in this example. For comparison purposes, several similar copolyesters identified in Table I (Comparisons 1 to 4) were also prepared.

The copolyesters were cryogenically ground and screened to obtain a powder that passed a 70-mesh screen. The powders were applied from an engraved roll to a cotton interlining fabric to form an interlining containing rows of adhesive dots across the interlining fabric. The interlining was used to bond two different face fabrics, wool/polyester and polyester/cotton. The interlinings were bonded to face fabrics by pressing squares of interlining approximately 10 cm on a side to squares of face fabric also approximately 10 cm on a side using either steam or an electric press. The bonded fabrics were laundered and dry-cleaned, then cut into strips 2.54 cm wide and T-peel strengths were determined before and after dry-cleaning. The T-peel strengths reported were determined as described previously herein.

As shown in Runs 1 to 8, the copolyesters of this invention are useful as low-melting, partially crystalline materials that are very useful as fusible adhesives. They are resistant to dry-cleaning and have good adhesion to a variety of fabrics and have rapid crystallization rates. These runs also show that copolyesters derived from dimethyl terephthalate and a saturated dibasic dicarboxylic acid moiety with the major glycol being 1,4-butanediol and containing minor portions of diethylene glycol are grindable into powder, have rapid crystallization rates, and have sufficient crystallinity, insolubility in dry-cleaning solvents, and low-temperature bonding characteristics to make them useful as fabric adhesives.

Comparison 1 was a copolyester derived from dimethyl terephthalate, 1,4-butanediol, and diethylene glycol in which the second acid moiety is isophthalic acid. This copolyester had a very slow crystallization rate, a low degree of crystallinity. It was, therefore, tacky and had poor resistance to dry-cleaning.

Comparison 2 was a copolyester derived from dimethyl terephthalate, dimethyl glutarate, 1,4-butanediol, where ethylene glycol had been substituted for diethylene glycol. The copolyester had a very slow crystallization rate, was tacky, and did not have adequate resistance to dry-cleaning.

Comparison 3 was a copolyester derived from 1,4-cyclohexanedicarboxylate, 1,4-butanediol, and diethylene glycol. This copolyester was low melting (91°C) and had a low degree of crystallinity ($\Delta H_f < 4.18$ J/g). The copolyester was tacky. It bonds fabrics, but it had poor grindability since it blocked. It also had poor dry-cleaning resistance.

Comparison 4 was a copolyester derived from dimethyl terephthalate, isophthalic acid, azelaic acid, and a single glycol, 1,4-butanediol. The copolyester was low melting (115°C), but had a slow crystallization rate, was tacky, and did not adequately dry-clean. As illustrated by Comparisons 1 to 4, copolyesters that are quite similar in structure to those of the invention do not exhibit the very desirable combinations of characteristics which make the latter particularly suitable for use as fusible adhesives.

*Table I*

| Run No. | 1 | 2 | 3 |
|---|---|---|---|
| Mole percent of dibasic acid and glycol components | 65 dimethyl terephthalate 35 dimethyl glutarate 70 1,4-butanediol 30 diethylene glycol | 60 dimethyl terephthalate 40 dimethyl glutarate 75 1,4-butanediol 25 diethylene glycol | 70 dimethyl terephthalate 30 dimethyl glutarate 55 1,4-butanediol 45 diethylene glycol |
| Inherent viscosity | 1.0 | 1.0 | 0.91 |
| $\Delta H_f$, J/g (DSC) | 11.46 | 15.27 | 11.97 |
| T-peel strength 23°C, kg/cm (lb/in) | 0.48 (2.7) | 0.39 (2.2) | 0.38 (2.1) |
| T-peel strength after dry-cleaning, kg/cm (lb/in) | 0.47 (2.5) | 0.38 (2.1) | 0.36 (2.0) |
| Melting point, °C (DSC) | 113 | 112 | 108 |
| Bonding temperature, °C | 120 | 120 | 120 |
| Type failure | None | None | None |
| Grindability | Excellent | Excellent | Excellent |
| Crystallization ½ time (min) | 0.3 | 1.7 | 3.0 |

*Table I (Continued)*

| Run No. | 4 | 5 | 6 |
|---|---|---|---|
| Mole percent of dibasic acid and glycol components | 55 dimethyl terephthalate 45 dimethyl glutarate 70 1,4-butanediol 30 diethylene glycol | 60 dimethyl terephthalate 40 dimethyl glutarate 63 1,4-butanediol 37 diethylene glycol | 65 dimethyl terephthalate 35 dimethyl glutarate 65 1,4-butanediol 35 diethylene glycol |
| Inherent viscosity | 1.1 | 1.1 | 1.15 |
| $\Delta H_f$, J/g (DSC) | 9.62 | 9.33 | 11.42 |
| T-peel strength 23°C, kg/cm (lb/in) | 0.38 (2.1) | 0.34 (1.9) | 0.3 (1.7) |
| T-peel strength after dry-cleaning, kg/cm (lb/in) | 0.36 (2.0) | 0.3 (1.7) | 0.26 (1.5) |
| Melting point, °C (DSC) | 102 | 100 | 110 |
| Bonding temperature, °C | 120 | 120 | 120 |
| Type failure | None | None | None |
| Grindability | Excellent | Excellent | Excellent |
| Crystallization ½ time (min) | 0.7 | 2.1 | 1.9 |

*Table I (Continued)*

| Run No. | 7 | 8 | Comparison 1 |
|---|---|---|---|
| Mole percent of dibasic acid and glycol components | 60 dimethyl terephthalate 40 dimethyl adipate 75 1,4-butanediol 25 diethylene glycol | 65 dimethyl terephthalate 35 dimethyl succinate 70 1,4-butanediol 30 diethylene glycol | 70 dimethyl terephthalate 30 dimethyl isophthalate 55 1,4-butanediol 45 diethylene glycol |
| Inherent viscosity | 0.95 | 0.85 | 0.98 |
| $\Delta H_f$, J/g (DSC) | 11.9 | 13.4 | 11.7 |
| T-peel strength 23° C, kg/cm (lb/in) | 0.38 (2.1) | 0.34 (1.9) | 0.15 (0.85) |
| T-peel strength after dry-cleaning, kg/cm (lb/in) | 0.34 (1.9) | 0.3 (1.7) | 0.38 (2.1) |
| Melting point, °C (DSC) | 112 | 114 | — |
| Bonding temperature, °C | 120 | 120 | 120 |
| Type failure | None | None | Tacky, dry-clean failure |
| Grindability | Excellent | Excellent | Poor |
| Crystallization ½ time (min) | 1.5 | 0.6 | >15 |

*Table I (Continued)*

| Comparison No. | 2 | 3 | 4 |
|---|---|---|---|
| Mole percent of dibasic acid and glycol components | 55 dimethyl terephthalate 40 dimethyl glutarate 70 1,4-butanediol 30 ethylene glycol | 100 trans 1,4-cyclohexane dicarboxylate 45 1,4-butanediol 55 diethylene glycol | 50 terephthalic 20 isophthalic 30 azelaic acid 100 1,4-butanediol |
| Inherent viscosity | 0.95 | 0.82 | 0.84 |
| $\Delta H_f$, J/g (DSC) | 8.8 | 4.18 | 6.07 |
| T-peel strength 23° C, kg/cm (lb/in) | 0.38 (2.1) | 0.43 (2.4) | 0.36 (2.0) |
| T-peel strength after dry-cleaning, kg/cm (lb/in) | 0.14 (0.8) | 0.02 (0.1) | 0.05 (0.3) |
| Melting point, °C (DSC) | 108 | 91 | 115 |
| Bonding temperature, °C | — | 110 | 110 |
| Type failure | Tacky | Tacky, dry-clean failure | Tacky, dry-clean failure |
| Grindability | Poor | Poor | Poor |
| Crystallization ½ time (min) | >12 | >15 | >15 |

*Example 2:*

As indicated herein, the copolyesters of this invention are very useful as fusible adhesives in the form of a binder fiber. To illustrate, a copolyester was prepared using a typical procedure as follows.

97 g of dimethyl terephthalate (0.5 mol), 60 g (0,566 mol) of diethylene glycol, 38.7 g (0.43 mol) of 1,4-butanediol, and 1.2 ml of n-butanol solution of titanium tetraisopropoxide which is 0.96 weight-% titanium were weighed into a 500 ml single-neck, round-bottom flask equipped with a nitrogen inlet, stirrer, vacuum outlet, and condensing flask. The flask was heated at 200° C in a metal bath for 3 h with a nitrogen sweep over the reaction mixture. When the theoretical amount of methanol had distilled from the reaction mixture, the metal bath temperature was increased to 255° C and the pressure in the flask was reduced to 0.5 to 0.2 mmHg for 1 h. The flask was then removed from the bath and allowed to cool as the polyester crystallized. Gas chromatographic analysis of the copolyester showed the following mole percents: dimethyl terephthalate 100 mol-%, diethylene glycol 45 mol-%, and 1,4-butanediol 55 mol-%.

The copolyester had an inherent viscosity of 0.95, a crystalline melting point of 155° C (DSC) and a crystallization half-time of 1 min.

A typical method for spinning binder fibers from copolyesters of this invention comprised extruding the copolyesters through a multi-hole spinnerette at 225 to 260°C, drawing the resulting fiber through a steam chest at approximately 140°C, and crimping and cutting the fiber into shorth lengths. Typical fiber properties were: denier per filament 2.25, tenacity 2.0 g/den, elongation 25%, crimp 10 per 2.54 cm at 95 ± 15° crimp angle, staple length 3.81 cm. Of course, other crimp angles and staple lengths could be used, depending upon the nature of the specific matrix fiber.

The binder fibers were then carded to obtain a blend with a matrix fiber, typically a polyester fiber. The amount of binder fiber used to obtain good bonding depended upon the item to be constructed. The nonwoven fabric was then heated at an appropriate temperature to obtain bonding. Usually not more than 25 weight-% binder fiber was required to form an adequate bond. Typical weights were 10 to 15 weight-% binder fiber and 80 to 90 weight-% matrix fiber. The binder fibers could be used to bond a wide variation of matrix fibers, including polyamide, polyester, polyolefin, and natural fibers.

Table II sets forth the properties of some typical binder fibers prepared in the manner described in this example. Such binder fibers can be specifically designed to melt over a wide range of temperatures, to have rapid crystallization rates, and to permit nonwoven fabrics to be prepared which do not have tacky surfaces.

Table III shows the properties of typical nonwoven webs prepared using binder fibers of varying compositions prepared in the manner described in this example. The range in bonding temperatures and tensile properties reported in Table III show that the binder fibers prepared from copolyesters of this invention which can be bonded over a wide range of temperatures and produce strong nonwoven fabrics. Tensile properties can be varied as desired depending on the weight (light or heavy) of the nonwoven articles to be made, bonding temperatures and pressures, and the amount of binding fiber included in the nonwoven fabric.

*Table II*

| Properties of copolyester binder fibers | | | | | |
|---|---|---|---|---|---|
| Binder fiber | Copolyesters | | Melting point, °C | Crystallization half-time, min | Heat of fusion $(H_f)$, J/g |
| | Mole percent | Moieties | | | |
| A | 100<br>50<br>50 | terephthalic acid<br>1,4-butanediol<br>diethylene glycol | 154 | 0.5 | 24.3 |
| B | 100<br>40<br>60 | terephthalic acid<br>diethylene glycol<br>1,4-butanediol | 166 | 0.3 | 25.9 |
| C | 55<br>45<br>30<br>70 | terephthalic acid<br>glutaric acid<br>diethylene glycol<br>1,4-butanediol | 114 | 3 | 16.3 |
| D | 50<br>50<br>100 | terephthalic acid<br>glutaric acid<br>1,4-butanediol | 132 | 2 | 13.6 |
| E | 65<br>35<br>35<br>65 | terephthalic acid<br>glutaric acid<br>diethylene glycol<br>1,4-butanediol | 122 | 1.5 | 16.3 |

*Table III*

| Nonwoven fabrics bonded with binder fibers | | | | | | | | |
|---|---|---|---|---|---|---|---|---|
| Non-woven fabric* | Extrusion temp., °C | Bonding temp., °C | Fabric weight, kg/m² (oz/yd²) | Fabric thickness, cm (in) | Flexural rigidity, gm/cm** | | Breaking load ×10³ g | |
| | | | | | Machine dir. | Cross machine | Machine dir. | Cross machine dir. |
| F | 225 | 175 | 0.22 (6.5) | 0.06 (0.025) | 138 | 99 | 41 | 13 |
| G | 225 | 190 | 0.17 (5.0) | 0.13 (0.052) | 41 | 23 | 29 | 10 |
| H | 200 | 150 | 0.22 (6.4) | 0.05 (0.019) | 74 | 32 | 36 | 10 |
| I | 230 | 150 | 0.21 (6.2) | 0.05 (0.019) | 43 | 27 | 29 | 9 |
| J | 200 | 135 | 0.16 (4.8) | 0.07 (0.026) | 16 | 3 | 15 | 2 |

* F: nonwoven fabric is 20 weight-% fiber A (see Table II) and 80 weight-% poly(ethylene terephthalate) matrix fiber.

G: nonwoven fabric is 20 weight-% fiber B (see Table II) and 80 weight-% poly(ethylene terephthalate) matrix fiber.

H: nonwoven fabric is 20 weight-% fiber C (see Table II) and 80 weight-% poly(ethylene terephthalate) matrix fiber.

I: nonwoven fabric is 20 weight-% polymer D (see Table II) and 80 weight-% poly(ethylene terephthalate) matrix fiber.

J: nonwoven fabric is 20 weight-% polymer E (see Table II) and 80 weight-% poly(ethylene terephthalate) matrix fiber.

All binder fibers were 3.81 cm staple length.

** Cantilever stiffness test ASTM D-1388.

When 50 mol-% of either malonic acid or dodecanenoic acid moiety is substituted for the diethylene glycol moiety in polymer A of Table II, the resulting copolyesters exhibit comparable physical properties. In addition, such resulting copolyesters are excellent binder fibers and provide results similar to those reported in Table III for polymer A in nonwoven fabric F.

## Claims

1. A linear copolyester derived from a dibasic acid component comprising a terephthalic acid moiety and a glycol component comprising a 1,4-butanediol moiety, characterized in that

(1) the dibasic acid component comprises from 40 to 100 mol-% of the terephthalic acid moiety, any remainder consisting essentially of at least one moiety from a saturated aliphatic dicarboxylic acid having 3 to 12 carbon atoms;

(2) the glycol component comprises from 40 to 100 mol-% of the 1,4-butanediol moiety, any remainder consisting essentially of a diethylene glycol moiety; and

(3) the copolyester containing at least 20 mol-%, based on the 200 mol-% total of the dibasic acid and glycol components, of the saturated aliphatic dicarboxylic acid and/or the diethylene glycol;

(4) the copolyester having a melting point of 40 to 190°C, a glass transition temperature of −20 to 40°C, a heat of fusion ($\Delta H_f$) not less than 4.18 J/g and a crystallization half-time of less than 10 min at maximum crystallization temperature.

2. A linear copolyester according to Claim 1, wherein the dibasic acid component is 100 mol-% terephthalic acid moiety.

3. A linear copolyester according to Claim 1, wherein the dibasic acid component comprises a saturated aliphatic dicarboxylic acid moiety containing 4 to 6 carbon atoms.

4. A linear copolyester according to Claim 3, wherein the saturated aliphatic dicarboxylic acid moiety is glutaric acid moiety.

5. A linear copolyester according to Claim 1, wherein the dibasic acid component comprises terephthalic acid and glutaric acid moieties and the glycol component comprises 1,4-butanediol and diethylene glycol moieties.

6. A fusible adhesive in powder form comprising a copolyester according to any of Claims 1, 3, 4 or 5, wherein at least 50 mol-% of the dibasic acid component is terephthalic acid moiety, at least 50 mol-% of the glycol component is 1,4-butanediol moiety, the mole percent of the aliphatic dicarboxylic acid and/or diethylene glycol moieties is from 60 to 120 mol-% based on the 200 mol-% total and the melting point of the copolyester is 40 to 130°C.

7. A fusible interlining having a fusible adhesive according to Claim 6 coated thereon.

8. A textile fabric laminated to a substrate by means of a fusible adhesive according to Claim 6.

9. A fusible adhesive in binder fiber form comprising a linear copolyester according to any of Claims 1 to 5, wherein the mole percent of the aliphatic dicarboxylic and/or diethylene glycol moieties is from 20 to 70 mol-% based on the 200 mol-% total and the melting point of the copolyester is 125 to 190°C.

## Revendications

1. Copolyester linéaire dérivé d'un constituant acide dibasique comprenant un motif acide téréphtalique et d'un constituant glycol comprenant un motif 1,4-butanediol, caractérisé en ce que:

1. le constituant acide dibasique est formé de 40 à 100% en moles d'acide téréphtalique, le reste étant formé essentiellement d'au moins un motif dérivé d'un acide dicarboxylique aliphatique saturé ayant de 3 à 12 atomes de carbone;

2. le constituant glycol est formé de 40 à 100% en moles de 1,4-butanediol, le reste étant formé essentiellement de diéthylèneglycol;

3. le copolyester contenant au moins 20 mol, par rapport au total de 200 mol des constituants acide dibasique et glycol, de l'acide dicarboxylique aliphatique saturé et/ou du diéthylèneglycol;

4. le copolyester ayant un point de fusion de 40 à 190°C, une température de transition vitreuse de −20 à 40°C, une chaleur de fusion ($\Delta H_f$) supérieure ou égale à 4,18 J/g et une demi-durée de cristallisation inférieure à 10 min à la température maximale de cristallisation.

2. Copolyester linéaire selon la revendication 1, dans lequel le constituant acide dibasique est formé de 100% en moles d'acide téréphtalique.

3. Copolyester linéaire selon la revendication 1, dans lequel le constituant acide dibasique comprend un motif acide dicarboxylique aliphatique saturé contenant de 4 à 6 atomes de carbone.

4. Copolyester linéaire selon la revendication 3, dans lequel le motif acide dicarboxylique aliphatique saturé est l'acide glutarique.

5. Copolyester linéaire selon la revendication 1, dans lequel le constituant acide dibasique comprend des motifs acide téréphtalique et des motifs acide glutarique, et le constituant glycol comprend des motifs 1,4-butanediol et des motifs diéthylèneglycol.

6. Adhésif en poudre fusible, comprenant un copolyester selon l'une des revendications 1, 3, 4 ou 5, dans lequel au moins 50% en moles du constituant acide dibasique est l'acide téréphtalique, au moins 50% en moles du constituant glycol est le 1,4-butanediol, comprenant entre 60 et 120 mol d'acide dicarboxylique aliphatique et/ou de diéthylèneglycol par rapport à un total de 200 mol, et le point de fusion du copolyester est compris entre 40 et 130°C.

7. Doublure intermédiaire sur laquelle est appliqué un adhésif fusible conforme à la revendication 6.

8. Produit textile stratifié sur un substrat au moyen d'un adhésif fusible conforme à la revendication 6.

9. Adhésif fusible sous forme de liant fibreux formé d'un copolyester linéaire conforme à l'une des revendications 1 à 5, dans lequel la quantité en moles des motifs acide dicarboxylique aliphatique et/ou des motifs diéthylèneglycol est comprise entre 20 et 70 mol par rapport à un total de 200 mol, et le point de fusion du copolyester est compris entre 125 et 190°C.

**Patentansprüche**

1. Linearer Copolyester, der sich von einer dibasischen Säurekomponente mit einem Terephthalsäureanteil und einer Glykolkomponente mit einem 1,4-Butandiolanteil ableitet, dadurch gekennzeichnet, dass

1) die dibasische Säurekomponente zu 40 bis 100 Mol-% aus dem Terephthalsäureanteil und der gegebenenfalls vorhandene Rest im wesentlichen aus mindestens einem Anteil aus einer gesättigten aliphatischen Dicarbonsäure mit 3 bis 12 Kohlenstoffatomen besteht;

2) die Glykolkomponente zu 40 bis 100 Mol-% aus dem 1,4-Butandiolanteil und der gegebenenfalls vorhandene Rest im wesentlichen aus einem Diethylenglykolanteil besteht;

3) der Copolyester mindestens 20 Mol-%, bezogen auf die gesamten 200 Mol-% aus dibasischer Säure- und Glykolkomponenten, an der gesättigten aliphatischen Dicarbonsäure und/oder dem Diethylenglykol enthält, und

4) der Copolyester einen Schmelzpunkt von 40 bis 190°C, eine Glasübergangstemperatur von −20 bis 40°C, eine Schmelzwärme ($\Delta H_f$) von nicht weniger als 4,18 J/g und eine Kristallisationshalbzeit von weniger als 10 min bei maximaler Kristallisationszeit aufweist.

2. Linearer Copolyester nach Anspruch 1, dadurch gekennzeichnet, dass die dibasische Säurekomponente aus einem 100 mol-%igen Terephthalsäureanteil besteht.

3. Linearer Copolyester nach Anspruch 1, dadurch gekennzeichnet, dass die dibasische Säurekomponente einen Anteil an einer gesättigten aliphatischen Dicarbonsäure mit 4 bis 6 C-Atomen enthält.

4. Linearer Copolyester nach Anspruch 3, dadurch gekennzeichnet, dass der Anteil aus der gesättigten aliphatischen Dicarbonsäure aus einem Glutarsäureanteil besteht.

5. Linearer Copolyester nach Anspruch 1, dadurch gekennzeichnet, dass die dibasische Säurekomponente Terephthalsäure- und Glutarsäureanteile und die Glykolkomponente 1,4-Butandiol- und Diethylenglykolanteile enthält.

6. Schmelzbarer Klebstoff in Pulverform aus einem Copolyester nach einem der Ansprüche 1, 3, 4 oder 5, dadurch gekennzeichnet, dass mindestens 50 Mol-% der dibasischen Säurekomponente aus einem Terephthalsäureanteil und mindestens 50 Mol-% der Glykolkomponente aus einem 1,4-Butandiolanteil bestehen und dass die Mol-% an aliphatischer Dicarbonsäure- und/oder Diethylenglykolanteilen bei 60 bis 120 Mol-%, bezogen auf die gesamten 200 Mol-%, liegen und dass der Schmelzpunkt des Copolyesters bei 40 bis 130°C liegt.

7. Schmelzbares Zwischenfutter, gekennzeichnet durch einen aufgetragenen schmelzbaren Klebstoff gemäss Anspruch 6.

8. Textiles, auf ein Substrat laminiertes Gewebe, dadurch gekennzeichnet, dass es mittels eines schmelzbaren Klebstoffs gemäss Anspruch 6 auf das Substrat laminiert ist.

9. Schmelzbarer Klebstoff in Form von Bindemittel-Fasern aus oder mit einem linearen Copolyester nach einem der Ansprüche 1 bis 5, bei dem der Mol-Prozentsatz an Anteilen an aliphatischer Dicarbonsäure und/oder Diethylenglykol bei 20 bis 70 Mol-%, bezogen auf die gesamten 200 Mol-%, liegt, und der einen Schmelzpunkt von 125 bis 190°C hat.